# FASCICULE DE BREVET EUROPEEN

(11) **EP 4 146 913 B1**
(45) Date de publication et mention de la délivrance du brevet: **06.03.2024**
(21) Numéro de dépôt: 21732399.7
(22) Date de dépôt: 28.04.2021
(51) Int. Cl.: F01D 9/06, F01D 5/28

(54) **DISTRIBUTEUR EN CMC AMÉLIORÉ POUR TURBINE DE TURBOMACHINE**
VERBESSERTE CMC-LEITSCHAUFEL FÜR EINE TURBOMASCHINENTURBINE
IMPROVED CMC GUIDE VANE FOR A TURBOMACHINE TURBINE

(30) Priorité: 06.05.2020 FR 2004494
(43) Date de publication de la demande: 15.03.2023
(73) Titulaire: SAFRAN AIRCRAFT ENGINES, 75015 Paris (FR); Safran Ceramics, 33185 Le Haillan (FR)
(72) Inventeur: DANIS, Antoine, Claude, Michel, Etienne, 77550 MOISSY-CRAMAYEL (FR); JARROSSAY, Clément, 77550 MOISSY-CRAMAYEL (FR); QUENNEHEN, Lucien, Henri, Jacques, 77550 MOISSY-CRAMAYEL (FR); TABLEAU, Nicolas, Paul, 77550 MOISSY-CRAMAYEL (FR); GIMAT, Matthieu, Arnaud, 77550 MOISSY-CRAMAYEL (FR)
(74) Mandataire: Cabinet Beau de Loménie
(86) Numéro de dépôt international: PCT/FR2021/050733
(87) Numéro de publication internationale: WO 2021/224565

(56) Documents cités:
- EP-A1- 3 121 384
- FR-A1- 3 080 146
- US-A1- 2016 123 164
- US-A1- 2019 390 558

## Description

### Domaine technique

L'invention concerne le domaine des turbomachines, notamment des turbomoteurs aéronautiques ou des turbines industrielles, et plus particulièrement un étage de distributeur de turbine en matériau composite à matrice céramique, désigné ci-après par matériau CMC. Le domaine d'application de l'invention est notamment celui des moteurs aéronautiques à turbine à gaz. L'invention est toutefois applicable à d'autres turbomachines, par exemple des turbines Technique antérieure

Les distributeurs haute pression ou basse pression de turbomachines, tels que décrits dans le document FR 2 955 145, comportent notamment des aubes fixes ayant chacune une pale maintenue à chacune de ses extrémités par une plateforme interne et une plateforme externe, ces dernières définissant une veine de circulation de gaz éjectés par la chambre de combustion. Ces aubes permettent de diriger l'écoulement des gaz sortant de la chambre de combustion sur les aubes de rotor de la turbine. Ces aubes sont creuses, et comportent au moins une cavité, dont les extrémités débouchent à l'extérieur de la veine.

Ces aubes étant exposées aux gaz chauds de combustion, il est nécessaire de les refroidir pour atténuer les contraintes thermiques. Une solution consiste à utiliser de l'air provenant d'un autre élément de la turbomachine, par exemple le compresseur. Plus précisément, de l'air de ventilation relativement frais est prélevé en amont de la chambre de combustion à la sortie d'un étage du compresseur. Cet air est injecté dans la ou les cavité(s) des aubes par l'une ou l'autre des extrémités de celles-ci, pour les refroidir de l'intérieur. L'air peut s'échapper ensuite dans la veine par des trous réalisés dans les aubes et communiquant avec la ou les cavité(s) de l'aube et avec la veine, l'air de refroidissement créant un film protecteur d'air plus frais s'écoulant le long de la surface extérieure de l'aube.

Pour ce faire, un mât, ou chemise, est généralement enchâssée dans la ou les cavité(s) d'une telle aube. Ce mât, également creux, peut comporter une pluralité de trous sur toute sa surface. L'air relativement frais prélevé en amont de la chambre de combustion est injecté à l'intérieur du mât pour refroidir l'aube, de l'intérieur, par impact.

De plus, pour refroidir des pièces internes de la turbine, une partie de l'air de ventilation est généralement acheminée via la cavité d'au moins une partie des aubes de la turbine vers une cavité sous distributeur, c'est-à-dire une cavité disposée radialement à l'intérieur du distributeur, dans laquelle s'étendent notamment des moyeux des disques du rotor.

Cependant, l'amélioration des performances des turbomachines et la réduction de leurs émissions polluantes conduit à envisager des températures de fonctionnement de plus en plus élevées. Pour des éléments de parties chaudes de turbomachines, il a donc été proposé d'utiliser des matériaux composites à matrice céramique, notés CMC par la suite.

Les matériaux CMC sont typiquement formés d'un renfort fibreux en fibres réfractaires, telles que des fibres de carbone ou de céramique, densifié par une matrice en céramique ou au moins partiellement en céramique.

Ces matériaux possèdent des propriétés thermo-structurales intéressantes, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, l'utilisation de matériaux CMC pour des aubes de distributeurs de turbine a été proposée dans les documents FR 2 979 662 et FR 3 061 928 par exemple. FR 3 080 146 A1 divulgue un autre exemple de distributeur en CMC avec reprise d'effort.

Introduire un étage distributeur, par exemple un étage distributeur haute pression comprenant des aubes en CMC, permet ainsi d'augmenter la température maximale tolérée par rapport à un étage distributeur métallique, et ainsi de diminuer la quantité d'air de refroidissement utilisée. Cela permet ainsi d'augmenter les performances de la turbomachine.

Toutefois, le CMC, par ses propriétés différentes du métal est plus sensible à certaines contraintes mécaniques. En effet le CMC présente une plus grande rigidité et une plus faible dilatation. Il se comporte mieux en compression, mais ses contraintes admissibles en traction sont plus faibles que celles du métal. De plus, l'intégration dans un environnement métallique d'une pièce en CMC est délicate en raison des dilatations thermiques différentielles entre le CMC et le métal. Cela est d'autant plus délicat dans une turbomachine, et plus particulièrement dans une partie à haute pression de la turbomachine, car l'environnement est très chaud, ce qui amplifie les différences de coefficients de dilatation thermique entre les matériaux, les efforts aérodynamiques subis par un étage distributeur haute pression étant en outre élevés dans cette zone de la turbine. La difficulté à maintenir un positionnement déterministe des aubes du distributeur nuit à l'étanchéité de l'ensemble. En effet, la dilatation thermique différentielle des différents matériaux de ces pièces entraîne des jeux entre ces pièces lors du fonctionnement de la turbomachine, et produit ainsi un défaut d'étanchéité.

Il est donc nécessaire d'adapter l'architecture de ces distributeurs de manière à ce que les contraintes sur les aubes CMC soient limitées, tout en maintenant le positionnement de celles-ci de manière à limiter les jeux différentiels et ainsi limiter les fuites.

### Exposé de l'invention

Le présent exposé concerne un distributeur pour turbine de turbomachine s'étendant autour d'un axe central, comprenant au moins une virole radialement externe, au moins une virole radialement interne, et au moins une aube en matériau composite à matrice céramique, distincte de la virole radialement interne et de la virole radialement externe, et s'étendant radialement entre ladite virole radialement interne et ladite virole radialement externe, l'aube étant creuse et comprenant une cavité débouchant à une extrémité radialement interne et à une extrémité radialement externe de l'aube, le distributeur comprenant au moins un mât tubulaire disposé dans la cavité de l'aube et permettant d'acheminer l'air de ventilation traversant ladite cavité de l'aube, le mât comprenant une extrémité radialement externe fixée à la virole radialement externe, et une extrémité radialement interne coopérant avec une bride radiale de positionnement de la virole radialement interne, l'extrémité radialement interne du mât comprenant une portion d'engagement qui coopère par emboitement avec une encoche de ladite bride radiale de positionnement, de sorte à limiter un mouvement relatif du mât par rapport à la bride radiale de positionnement.

Dans certains modes de réalisation, les viroles radialement interne et externe, et le mât, sont en métal.

De préférence, le distributeur comprend une pluralité d'aubes fixées les unes aux autres circonférentiellement autour de l'axe central. Chaque aube du distributeur comprend de préférence une plateforme radialement externe reliée à la virole radialement externe, une plateforme radialement interne reliée à la virole radialement interne, et une pale s'étendant radialement entre ces deux plateformes. La plateforme radialement interne, la plateforme radialement externe et la pale sont en CMC.

Par « extrémités radiales interne ou externe », on comprend les extrémités de l'aube et du mât lorsque l'aube est montée dans une turbomachine. L'aube est creuse, de sorte que la cavité de celle-ci s'étend de part et d'autre de l'aube, à chaque extrémité de celle-ci. En d'autres termes, une cavité de l'aube est équivalente à un orifice traversant toute la hauteur de l'aube, et débouchant aux extrémités radialement interne et externe de l'aube.

De préférence, chaque aube du distributeur comprend un mât disposé dans la cavité de l'aube. L'extrémité radialement externe du mât est fixée à la virole radialement externe, et l'extrémité radialement interne du mât coopère avec la virole radialement interne. Plus précisément, l'extrémité radialement interne du mât coopère avec une bride radiale de positionnement de ladite virole radialement interne, par exemple en étant en butée contre ladite bride, par l'intermédiaire de la portion d'engagement et de l'encoche de la bride.

Le mât est ainsi structurellement relié à la virole radialement externe, elle-même solidaire du carter de la turbine, et à la virole interne. Le mât n'est ainsi pas structurellement et directement relié à l'aube, qui est distincte de la virole interne et de la virole externe. Cette configuration permet aux efforts de transiter via le mât, en évitant l'aube en CMC. Chaque secteur annulaire de l'étage distributeur est ainsi maintenu de façon déterministe, c'est-à-dire de manière à éviter que le secteur annulaire se mette à vibrer et en maîtrisant sa position, et cela tout en permettant à l'aube de se déformer sous les effets de la température et de la pression indépendamment des pièces métalliques.

Le dispositif du présent exposé permet ainsi d'améliorer l'étanchéité du distributeur, malgré la dilatation thermique différentielle des aubes en CMC et des pièces métalliques.

En outre, le fait que l'extrémité radialement interne du mât comprenne une portion d'engagement coopérant par emboitement dans une encoche d'une bride radiale de positionnement de la virole radialement interne permet d'améliorer encore le positionnement du mât du distributeur selon les directions circonférentielles et radiales. En d'autres termes, cela permet un centrage précis de la virole radialement interne, permettant un positionnement précis de cette pièce, en limitant un déplacement relatif radial et circonférentiel du mât par rapport à la virole radialement interne. En particulier, ce couplage entre le mât et la virole interne, par l'intermédiaire de la portion d'engagement et de l'encoche, permet de limiter, voire bloquer un mouvement de rotation du mât par rapport à la virole radialement interne, autour de l'axe central.

Ainsi, le distributeur selon le présent exposé permet de limiter les dilatations différentielles, tout en améliorant le positionnement des pièces.

Dans certains modes de réalisation, la portion d'engagement est disposée à une extrémité aval, le long de l'axe central, de l'extrémité radialement interne du mât.

En d'autres termes, le mât présente un bord d'attaque et un bord de fuite, la portion d'engagement étant disposée au niveau du bord de fuite. Ainsi, seule une portion du mât est utilisée pour coopérer avec l'encoche de la bride de positionnement. Cela permet de faciliter la fabrication du distributeur.

Dans certains modes de réalisation, la portion d'engagement comprend un épaulement réalisé dans l'épaisseur du mât.

L'épaulement peut être un décaissement creusé dans la matière constituant le mât. Ainsi, l'épaisseur du mât est localement plus faible au niveau de l'épaulement, que sur le reste du mât. En particulier, de préférence, la portion d'engagement du mât peut, au niveau de l'épaulement, avoir une forme complémentaire à celle de l'encoche, facilitant l'emboitement et améliorant le maintien de la portion d'engagement dans l'encoche. Cette configuration permet ainsi, lorsque l'épaulement est engagé dans l'encoche, d'améliorer le positionnement du mât par rapport à la virole radialement interne, selon les directions circonférentielles et radiales.

Dans certains modes de réalisation, un passage interne du mât tubulaire débouche en regard d'un orifice de ladite virole radialement interne, de manière à acheminer l'air de ventilation à travers l'orifice jusqu'à une cavité sous distributeur disposée radialement à l'intérieur de la virole radialement interne.

Le passage interne du mât tubulaire débouche radialement entre l'extrémité radialement interne de l'aube et la virole radialement interne, en regard de l'orifice de la virole radialement interne. On comprend donc que la longueur du mât, selon la direction radiale, est supérieure à celle de l'aube, l'extrémité interne du mât se prolongeant radialement, vers l'intérieur, au-delà de l'extrémité interne de l'aube. Par « en regard », on comprend que le passage interne du mât débouche à une position circonférentiellement sensiblement identique à celle de l'orifice. En d'autres termes, le passage interne du mât est sensiblement dans le prolongement de l'orifice. Cette disposition permet ainsi d'acheminer l'air de ventilation au plus près de l'orifice, jusqu'à la cavité sous distributeur à travers ledit orifice, de manière à pressuriser cette cavité.

Dans certains modes de réalisation, le distributeur comprend un boitier d'étanchéité disposé radialement entre la plateforme radialement interne de l'aube et la virole radialement interne, le boitier d'étanchéité comprenant une enceinte interne débouchant en regard de l'orifice de la virole radialement interne, l'extrémité radialement interne du mât étant disposée au moins en partie dans le boitier d'étanchéité, de manière à éjecter l'air de ventilation traversant la mât, dans ledit boitier d'étanchéité.

Le boitier d'étanchéité est de préférence métallique. L'extrémité radialement interne du mât est disposée au moins en partie dans le boitier d'étanchéité de sorte que le passage interne du mât débouche dans le boitier. La présence du boitier d'étanchéité permet de limiter les fuites lors du passage de l'air de ventilation entre l'extrémité radialement interne du mât et l'orifice de la virole radialement interne, destiné à être injecté dans la cavité sous distributeur pour pressuriser cette dernière. Plus précisément, la présence du boitier d'étanchéité permet de confiner l'air de ventilation dans l'espace entre la virole radialement interne et la plateforme radialement interne, en particulier dans l'enceinte interne du boitier d'étanchéité.

Dans certains modes de réalisation, la plateforme radialement interne de l'aube est reliée au boitier d'étanchéité par l'intermédiaire de languettes d'étanchéité autorisant une translation radiale relative du boitier d'étanchéité par rapport à l'aube.

Les languettes sont de préférence reliées à la plateforme radialement interne d'une part, et au boitier d'étanchéité d'autre part, en étant insérées dans des rainures de ladite plateforme et de ladite virole respectivement. Le jeu, ou débattement radial du boitier d'étanchéité est limité d'une part par la plateforme radialement interne de l'aube, et d'autre part par la virole radialement interne. Le fait que le boitier d'étanchéité ne soit pas fixé à la plateforme radialement interne de l'aube en CMC, impliquant un faible jeu radial entre le boitier et l'aube, permet de limiter davantage les contraintes transitant dans cette aube. En outre, malgré cette liberté de mouvement, les languettes permettent d'apporter une étanchéité entre le boitier d'étanchéité et l'aube, limitant ainsi les fuites d'air de ventilation transitant entre l'extrémité radialement interne du mât et la cavité sous distributeur, via l'orifice de la virole radialement interne.

Dans certains modes de réalisation, le distributeur comprend au moins un organe de liaison annulaire comprenant une extrémité de liaison radialement externe reliée au boitier d'étanchéité, et une extrémité de liaison radialement interne reliée à l'orifice de la virole radialement interne, de manière à pouvoir acheminer vers la cavité sous distributeur, l'air de ventilation traversant la mât et le boitier d'étanchéité.

De préférence, l'extrémité de liaison radialement externe est reliée de manière étanche au boitier d'étanchéité, et l'extrémité de liaison radialement interne est fixée de manière étanche à l'orifice de la virole radialement interne. Par ailleurs, l'ensemble boitier d'étanchéité et organe de liaison peut également translater radialement par rapport à l'aube. La présence de l'organe de liaison permet de faire transiter l'air de ventilation présent le boitier d'étanchéité, jusqu'à la cavité sous distributeur, en limitant davantage les fuites d'air de ventilation lors de ce passage, et en améliorant davantage l'étanchéité entre ces différentes pièces.

Dans certains modes de réalisation, les extrémités de liaison radialement interne et externe de l'organe de liaison présentent une forme bombée.

La forme bombée autorise une certaine mobilité relative de la virole radialement interne et du boitier d'étanchéité, tout permettant une étanchéité satisfaisante entre ces différentes pièces.

Dans certains modes de réalisation, la virole radialement interne comprend une bride radiale amont et une bride radiale aval configurées pour enserrer axialement le boitier d'étanchéité, la bride radiale de positionnement étant disposée axialement entre la bride amont et la bride aval.

La présence des brides amont et aval permet de limiter les déplacements axiaux, c'est-à-dire le long de l'axe central, du boitier d'étanchéité.

Dans certains modes de réalisation, le distributeur comprend une pièce intermédiaire de liaison fixée au boîtier d'étanchéité sur une face radialement interne dudit boitier, la pièce intermédiaire de liaison comprenant une portion tubulaire communiquant avec l'enceinte interne du boitier, l'extrémité de liaison radialement externe de l'organe de liaison étant reliée à la portion tubulaire de la pièce intermédiaire de liaison. De manière alternative, le boitier d'étanchéité et la pièce intermédiaire de liaison forme une seule et même pièce. En d'autres termes, le boitier lui-même comprend la portion tubulaire.

Le présent exposé concerne également une turbine comprenant un distributeur selon l'un quelconque des modes de réalisation précédents.

Le présent exposé concerne également une turbomachine comprenant une turbine selon le présent exposé.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en coupe longitudinale d'une turbomachine selon le présent exposé,
[Fig. 2] La figure 2 représente une vue en perspective d'un distributeur selon le présent exposé,
[Fig. 3] La figure 3 représente la partie inférieure du distributeur de la figure 2, le boitier d'étanchéité étant illustré en transparence,
[Fig. 4] La figure 4 représente la partie inférieure du distributeur de la figure 2, le boitier d'étanchéité et la pièce intermédiaire de liaison étant masqués,
[Fig. 5] La figure 5 représente une vue en perspective détaillée de la liaison entre la chemise et la virole interne du distributeur de la figure 4,
[Fig. 6A-6B] La figure 6A représente une vue en perspective d'une chemise du distributeur selon le présent exposé, et la figure 6B représente une vue détaillée de l'extrémité interne de la chemise de la figure 6A,
[Fig. 7A-7B] La figure 7A représente une vue en perspective d'un organe de liaison du distributeur selon le présent exposé, et la figure 7B représente une vue en coupe longitudinale de l'organe de liaison de la figure 7A.

### Description des modes de réalisation

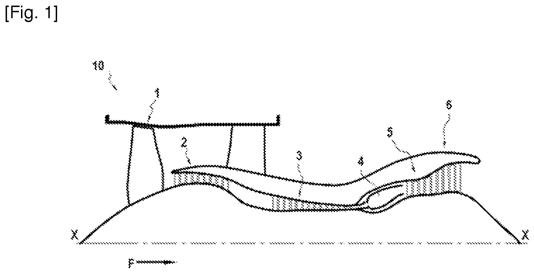

Les termes « amont » et « aval » sont par la suite définis par rapport au sens d'écoulement des gaz au travers une turbomachine, indiqué par la flèche F sur la figure 1. Le terme « radial » et ses dérivés est considéré par rapport à l'axe central X de la turbomachine. Plus précisément, une direction radiale est une direction perpendiculaire à l'axe central X.

La figure 1 illustre une turbomachine 10 à double flux s'étendant autour d'un axe central X, et comprenant de manière connue d'amont en aval successivement au moins une soufflante 1, une partie moteur comprenant successivement au moins un étage de compresseur basse pression 2, de compresseur haute pression 3, une chambre de combustion 4, au moins un étage de turbine haute pression 5 et de turbine basse pression 6.

De manière connue, une fraction d'air est prélevée sur le compresseur haute pression 3, par exemple, et est acheminée par l'intermédiaire d'un conduit de refroidissement (non représenté) en vue de refroidir des zones plus chaudes de la turbomachine 10, notamment la turbine haute pression 5 et la turbine basse pression 6. En particulier, cette fraction d'air, ou air de ventilation, peut être injecté dans les aubes creuses de la turbine haute ou basse pression 5, 6 de manière à refroidir ces dernières, et être acheminé jusqu'à une cavité P disposée radialement sous les distributeurs de ces turbines, de manière à pressuriser cette cavité P et ainsi limiter les fuites d'air chaud s'écoulant dans la veine, et également de refroidir certaines pièces internes de la turbine, par exemple les disques de rotor.

De manière également connue, une turbine telle que la turbine haute pression 5 ou la turbine basse pression 6 comporte un ou plusieurs étages, chaque étage comprenant un distributeur, aussi appelé redresseur, et une roue mobile. Chaque distributeur comprend des aubes fixes réparties circonférentiellement autour de l'axe central X.

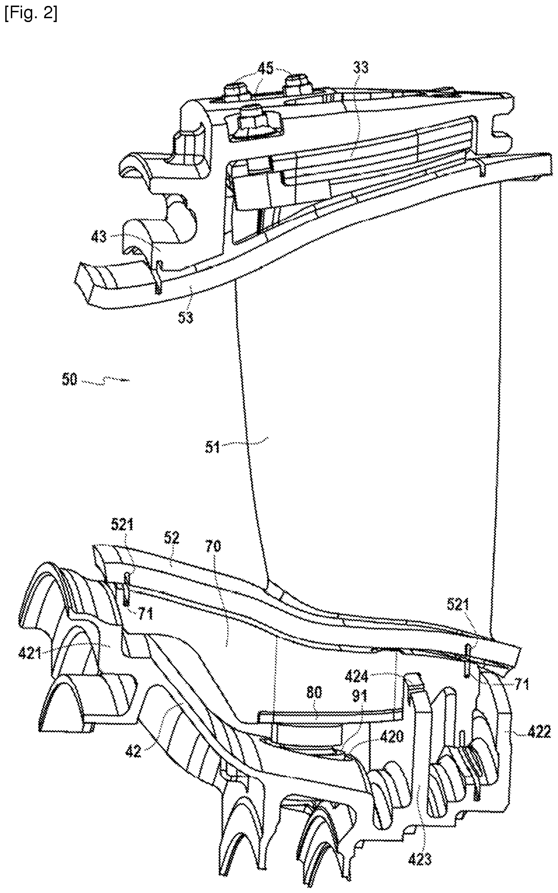

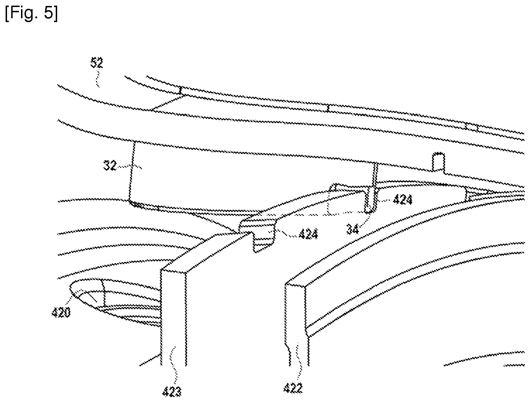

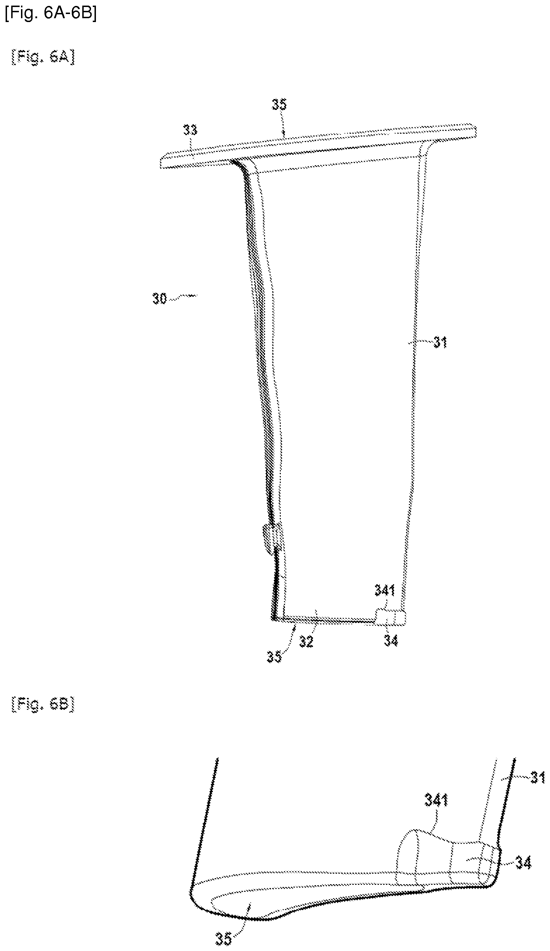

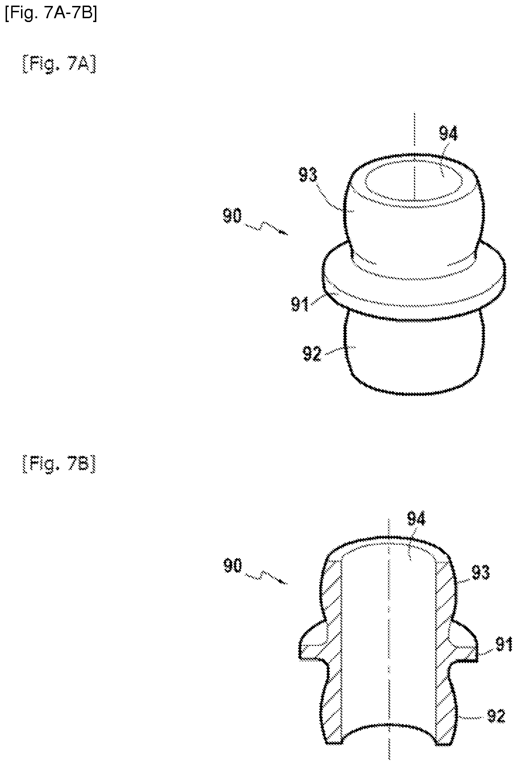

Un secteur de distributeur selon un mode de réalisation de l'invention va être décrit en référence aux figures 2 à 7B.

La figure 2 représente une vue en perspective d'une aube 50 d'un distributeur de la turbine haute pression 5. Cette exemple n'est pas limitatif, et peut s'appliquer à d'autres portions de la turbomachine, notamment la turbine basse pression 60.

Chaque aube 50 est creuse et comprend une pale 51, s'étendant radialement entre une plateforme radialement interne 52 (ci-après, « plateforme interne 52 ») et une plateforme radialement externe 53 (ci-après, « plateforme externe 53 »). Lorsque les aubes 50 du distributeur sont assemblées entre elles circonférentiellement, les plateformes 52, 53 définissent une veine de circulation des gaz éjectés par la chambre de combustion 4. La pale 51, les plateforme interne 52 et externe 53, sont en matériau composite à matrice céramique (« CMC »).

En outre, l'aube 50 s'étend radialement entre une virole radialement interne 42 (ci-après, « virole interne 42 »), et une virole radialement externe 43 (ci-après, « virole externe 43 »), ces viroles interne 42 et externe 43 étant métalliques, par exemple à base de nickel ou de cobalt. La virole externe 43 est solidaire d'un carter fixe (non représenté) de la turbine haute pression 50. La plateforme externe 53 est reliée à la virole externe 43, et la plateforme interne 52 est reliée à la virole interne 42 par l'intermédiaire d'un boitier d'étanchéité 70.

Le boitier d'étanchéité 70 est disposé radialement entre la plateforme interne 52 et la virole interne 42. Il comprend plusieurs parois assemblées entre elles de manière hermétique, formant une enceinte interne I. Le boitier d'étanchéité 70 comprend, au niveau de ses extrémités amont et aval, une rainure 71, disposée en vis-à-vis de rainures 521 de la plateforme interne 52 de l'aube 50. Le boitier d'étanchéité 70 est relié à la plateforme interne 52, au niveau de ses extrémités amont et aval, par l'intermédiaire de languettes d'étanchéité 72, insérées dans les rainures 71 et 521 respectives dudit boitier et de ladite plateforme. Les languettes d'étanchéité 72 permettent d'assurer l'étanchéité axiale de la liaison entre le boitier 70 et la plateforme interne 52, tout en permettant une translation radiale du boitier 70, le débattement radial de ce dernier étant toutefois limité par la plateforme interne 52 d'une part, et la virole interne 42 d'autre part.

Bien que non représentées, la plateforme externe 53 de l'aube 50 peut également être reliée à la virole externe 43 par l'intermédiaire de languettes d'étanchéité, selon le même principe que celui décrit dans le paragraphe précédent, permettant l'étanchéité entre ces deux pièces, tout en évitant aux efforts de transiter entre celles-ci.

Par ailleurs, le boitier d'étanchéité 70 est enserré axialement entre une bride amont 421, et une bride aval 422 de la virole interne 42, ces brides limitant ainsi les mouvements axiaux du boitier 70. Le boitier d'étanchéité 70 peut également comporter une encoche engagée avec une bride radiale de positionnement 423 de la virole interne 42, permettant de déterminer le positionnement axial dudit boitier. La bride radiale de positionnement 423 est disposée axialement entre la bride amont 421 et la bride aval 422 de la virole interne 42.

Une pièce intermédiaire de liaison 80 est fixée au boitier d'étanchéité 70. Dans cet exemple, la pièce intermédiaire 80 est soudée sur un côté inférieur, ou radialement interne, du boitier 70, formant ainsi la paroi inférieure dudit boitier 70. La pièce intermédiaire 80 comprend une portion tubulaire 81, dont une extrémité communique avec l'enceinte interne I du boitier 70. L'autre extrémité de la portion tubulaire débouche sur un orifice 420 de la virole interne 42. En particulier, chaque virole interne 52 du distributeur comprend un orifice 420. En d'autres termes, un distributeur, formé par l'assemblage circonférentiel des plateformes de l'aube et des viroles internes et externes, comprend une pluralité d'orifices 420 répartis circonférentiellement autour de l'axe central X, un orifice 420 étant fourni pour chaque aube 5 du distributeur, à une même position circonférentielle que cette aube 5.

De manière alternative, la pièce intermédiaire de liaison 80 et le boitier 70 peuvent ne former qu'une seule et même pièce. Dans ce cas, la portion tubulaire 81 s'étend depuis la paroi inférieure du boitier 70, en regard de l'orifice 420.

Un organe de liaison 90, de forme sensiblement annulaire de manière à définir un orifice sensiblement cylindrique 94, est disposé dans l'orifice 420. L'organe de liaison 90 comprend une extrémité de liaison radialement externe 93, une extrémité radialement interne 92, et une portion centrale 91, présentant une forme de collerette, disposée entre les extrémités de liaison 92 et 93. La portion centrale 91 peut notamment servir de butée contre la paroi délimitant l'orifice 420, limitant ainsi l'amplitude des mouvements de translation de l'organe de liaison et du boitier 70.

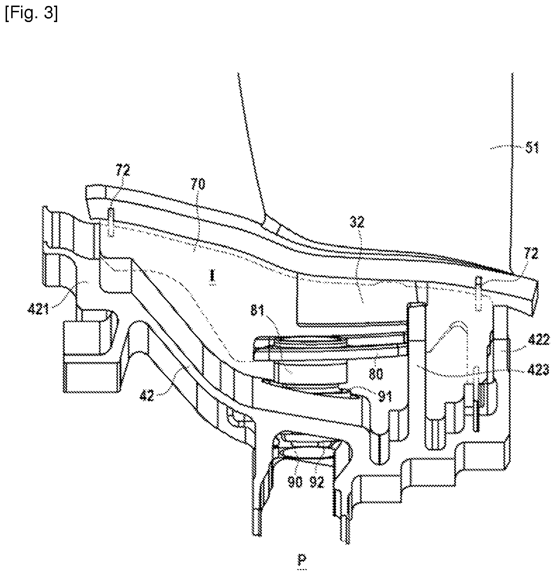

L'extrémité de liaison radialement externe 93 est reliée au boitier d'étanchéité 70, par l'intermédiaire de la portion tubulaire 81 de la pièce intermédiaire 80, et l'extrémité de liaison radialement interne 92 reliée à la virole interne 42. Plus précisément, dans cet exemple, les extrémités de liaison interne 92 et externe 93 ont une forme bombée. Ainsi, l'extrémité de liaison radialement externe 93 est fixée à la portion tubulaire 81, par exemple en étant montée en force dans celle-ci. Sur les figures 2 et 3, l'extrémité de liaison radialement externe 93 est insérée dans la portion tubulaire 81, donc non visible. L'extrémité de liaison radialement interne 92 est fixée à la virole interne 42 en étant montée en force dans l'orifice 420. Cet organe de liaison 90 permet ainsi de mettre en communication fluidique la cavité sous distributeur P, et l'enceinte interne I du boitier d'étanchéité 70.

Un mât 30 métallique, par exemple à base de nickel et/ou de cobalt, est inséré dans la cavité de chaque aube 50. Le mât 30 comprend une portion tubulaire 31, creuse, et disposée dans la cavité de l'aube 50. Ainsi, l'air de ventilation injecté dans la cavité de l'aube 50 peut s'écouler dans le mât 30, via un passage interne 35 s'étendant à l'intérieur de la portion tubulaire 31 creuse, entre ses deux extrémités radiales. La portion tubulaire 31 du mât 30 a une forme sensiblement évasée selon la direction radiale, avec une section plus petite à l'extrémité interne 32 qu'à l'extrémité externe 33.

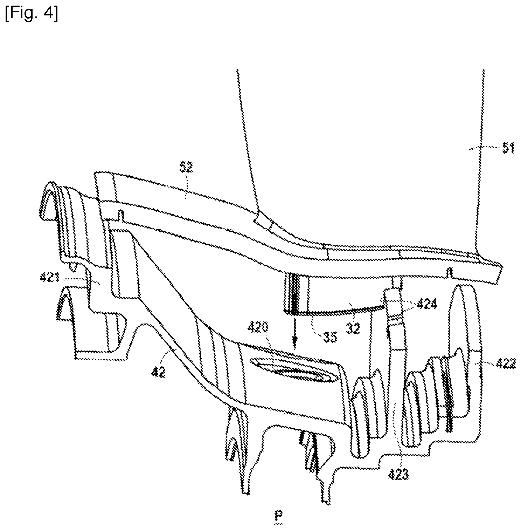

L'extrémité radialement externe 33 du mât 30 comprend une collerette fixée à la virole externe 43, par des liaisons boulonnées 45 par exemple. Une extrémité radialement interne 32 du mât 30 est disposée en vis-à-vis d'un orifice 420 de la virole interne 42. Par « en vis-à-vis », on comprend que l'extrémité interne 32 du mât 30, plus précisément l'extrémité du passage interne 35 présent dans la portion tubulaire 31, est disposée de manière à ce que l'air de ventilation circulant dans la portion tubulaire 31 puisse être éjecté vers l'orifice 420 (symbolisé par la flèche sur la figure 4), ce dernier communicant avec la cavité P, disposée radialement à l'intérieur de la virole interne 42.

L'extrémité interne 32 du mât 30 est disposée dans l'enceinte interne I du boitier d'étanchéité 70, en vis-à-vis de l'extrémité de la portion tubulaire 81 de la pièce intermédiaire 80 débouchant dans ladite enceinte. Ainsi, l'air de ventilation circulant dans la portion tubulaire 31, est éjecté par l'extrémité interne 32 du mât dans l'enceinte du boitier 70, puis acheminé jusqu'à la cavité sous distributeur P par l'intermédiaire de la portion tubulaire 81 et de l'organe de liaison 90. On notera donc que l'extrémité interne 32 est en vis-à-vis à la fois de l'orifice 420, de l'organe de liaison 90, et de la portion tubulaire 81, ces trois derniers éléments étant concentriques les uns avec les autres.

L'air de ventilation s'écoulant dans la portion tubulaire 31 peut ainsi être guidé jusqu'à la cavité sous distributeur P afin de pressuriser cette dernière, par l'intermédiaire du boitier d'étanchéité 70, de la portion tubulaire 81 et de l'organe de liaison 90. Ces éléments permettent ainsi d'acheminer l'air de ventilation, en limitant les fuites de ce dernier, lors de cet acheminement. En particulier, le boitier d'étanchéité 70 permet de confiner l'air de ventilation éjecté par l'extrémité interne 32 du mât 30, en évitant que cet air ne puisse s'échapper dans les directions axiale et circonférentielle.

En outre, l'extrémité interne 32 du mât 30 comprend également une portion d'engagement 34 pouvant s'engager dans une encoche 424 de la bride radiale de positionnement 423 de la virole interne 42. Plus précisément, la bride radiale de positionnement 423 comprend une pluralité d'encoches 424 réparties circonférentiellement autour de l'axe central X. De préférence, la bride radiale de positionnement 423 comprend autant d'encoche 424 que d'aube 50, et donc que de mât 30. La portion d'engagement 34 est disposée à l'extrémité aval de l'extrémité radialement interne 32 du mât 30.

Dans cet exemple, la portion d'engagement 34 est une portion localement amincie du mât 30. Plus précisément, la portion d'engagement 34 est un décaissement local réalisé, par exemple, par enlèvement de matière dans l'épaisseur du mât 30. Un tel décaissement se caractérise par un changement brusque du profil de surface du mât 30. L'épaisseur de cette portion d'engagement 34 est telle que cette dernière peut s'engager dans l'encoche 424 de la bride radiale de positionnement 423. A l'inverse, dans les portions du mât 30 autres que cette portion d'engagement 34, l'épaisseur du mât 30 est trop importante pour pouvoir s'engager dans cette encoche 424. Ainsi, lorsque la portion d'engagement 34 est engagée dans l'encoche 424, une paroi 341 du mât 30, correspondant à la ligne de décaissement permettant de former la portion d'engagement 34, vient en butée contre les parois de cette encoche 424.

Ainsi, lors du montage du mât 30 dans l'aube 50, la portion d'engagement 34, ainsi que l'encoche 424 de la bride radiale de positionnement 423 de la virole interne 42, permet de faciliter le positionnement radial et circonférentiel du mât 30, permettant un positionnement précis de celui-ci. En particulier, cela permet de positionner l'extrémité interne 32 du mât 30 à l'intérieure du boitier d'étanchéité 70, sans que cette extrémité ne vienne en butée, en dehors de la portion d'engagement 34, contre d'autres pièces. De plus, l'extrémité externe 33 du mât 30 est reliée à la virole externe 43 en étant fixée à celle-ci, et l'extrémité interne 32 est reliée à la virole interne 42, par engagement de la portion d'engagement 34 dans l'encoche 424. Ainsi, les efforts peuvent transiter via les pièces métalliques, notamment la virole externe 43, le mât 30 puis la virole interne 42, en évitant de contraindre l'aube 50 en CMC.

Par ailleurs, afin d'améliorer l'efficacité du couplage entre le mât 30 et la virole interne 42, la portion d'engagement 34 peut présenter une longueur, selon la direction de l'axe central X, comprise entre 1,5 et 8 mm, de préférence comprise entre 5 et 8mm, selon l'encombrement et le design de la pale et l'encombrement. En outre, l'encoche 424 peut présenter une forme évasée radialement, permettant de faciliter l'insertion de la portion d'engagement 34 dans celle-ci.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Distributeur pour turbine de turbomachine s'étendant autour d'un axe central (X), comprenant au moins une virole radialement externe (43), au moins une virole radialement interne (42), et au moins une aube (50) en matériau composite à matrice céramique, distincte de la virole radialement interne (42) et de la virole radialement externe (43), et s'étendant radialement entre ladite virole radialement interne (42) et ladite virole radialement externe (43), l'aube (50) étant creuse et comprenant une cavité débouchant à une extrémité radialement interne et à une extrémité radialement externe de l'aube (50), le distributeur comprenant au moins un mât (30) tubulaire disposé dans la cavité de l'aube et permettant d'acheminer l'air de ventilation traversant ladite cavité de l'aube (50), le mât (30) comprenant une extrémité radialement externe (33) fixée à la virole radialement externe (43), et **caractérisé en ce que** le mât (30) comprend en outre une extrémité radialement interne (32) coopérant avec une bride radiale de positionnement (423) de la virole radialement interne (42), l'extrémité radialement interne (32) du mât (30) comprenant une portion d'engagement (34) qui coopère par emboîtement avec une encoche (424) de ladite bride radiale de positionnement (423) de sorte à limiter un mouvement relatif du mât par rapport à la bride radiale de positionnement (423).

2. Distributeur selon la revendication 1, dans lequel la portion d'engagement (34) est disposée à une extrémité aval, le long de l'axe central (X), de l'extrémité radialement interne (32) du mât (30).

3. Distributeur selon la revendication 1 ou 2, dans lequel la portion d'engagement (34) comprend un épaulement réalisé dans l'épaisseur du mât (30).

4. Distributeur selon l'une quelconques des revendications 1 à 3, dans lequel un passage interne (35) du mât (30) tubulaire débouche en regard d'un orifice (420) de ladite virole radialement interne (42), de manière à acheminer l'air de ventilation à travers l'orifice (420) jusqu'à une cavité sous distributeur (P) disposée radialement à l'intérieur de la virole radialement interne (42).

5. Distributeur selon la revendication 4, comprenant un boitier d'étanchéité (70) disposé radialement entre une plateforme radialement interne (52) de l'aube (50) et la virole radialement interne (42), le boitier d'étanchéité (70) comprenant une enceinte interne (I) débouchant en regard de l'orifice (420) de la virole radialement interne (42), l'extrémité radialement interne (32) du mât étant disposée au moins en partie dans le boitier d'étanchéité (70) de manière à éjecter l'air de ventilation traversant le mât (30), dans ledit boitier d'étanchéité (70).

6. Distributeur selon la revendication 5, dans lequel la plateforme radialement interne (52) de l'aube (50) est reliée au boitier d'étanchéité (70) par l'intermédiaire de languettes d'étanchéité (72) autorisant une translation radiale relative du boitier d'étanchéité (70) par rapport à l'aube (50).

7. Distributeur selon la revendication 5 ou 6, dans lequel la virole radialement interne (42) comprend une bride radiale amont (421) et une bride radiale aval (422) configurées pour enserrer axialement le boitier d'étanchéité (70), la bride radiale de positionnement (423) étant disposée axialement entre la bride radiale amont (421) et la bride radiale aval (422).

8. Distributeur selon l'une quelconque des revendications 5 à 7, comprenant au moins un organe de liaison (90) annulaire comprenant une extrémité de liaison radialement externe (93) reliée au boitier d'étanchéité (70), et une extrémité de liaison radialement interne (92) reliée à l'orifice de la virole radialement interne (42), de manière à pouvoir acheminer vers la cavité sous distributeur (P), l'air de ventilation traversant la mât (30) et le boitier d'étanchéité (70).

9. Distributeur selon la revendication 8, dans lequel les extrémités de liaison radialement interne et externe (92, 93) de l'organe de liaison (90) présentent une forme bombée.

10. Turbine pour turbomachine comprenant au moins un distributeur selon l'une quelconque des revendications précédentes.

11. Turbomachine comprenant au moins une turbine selon la revendication 10.

## Patentansprüche

1. Leitrad für eine Turbine einer Turbomaschine, das sich um eine Mittelachse (X) erstreckt, umfassend zumindest einen radial äußeren Mantel (43), zumindest einen radial inneren Mantel (42), und zumindest eine Schaufel (50) aus Verbundmaterial mit keramischer Matrix, die sich von dem radial inneren Mantel (42) und dem radial äußeren Mantel (43) unterscheidet und sich radial zwischen dem radial inneren Mantel (42) und dem radial äußeren Mantel (43) erstreckt, wobei die Schaufel (50) hohl ist und einen Hohlraum umfasst, der an einem radial inneren Ende und an einem radial äußeren Ende der Schaufel (50) mündet, wobei das Leitrad zumindest einen rohrförmigen Mast (30) umfasst, der in dem Hohlraum der Schaufel angeordnet ist und es ermöglicht, die Ventilationsluft, die den Hohlraum der Schaufel (50) durchquert, zu leiten, wobei der Mast (30) ein radial äußeres Ende (33) aufweist, das an dem radial äußeren Mantel (43) befestigt ist, und **dadurch gekennzeichnet, dass** der Mast (30) ferner ein radial inneres Ende (32) umfasst, das mit einem radialen Flansch (423) zur Positionierung des radial inneren Mantels (42) zusammenwirkt, wobei das radial innere Ende (32) des Masts (30) einen Eingriffsabschnitt (34) umfasst, der durch Einpassen mit einem Gleitstück (424) des radialen Positionierungsflansches (423) auf solche Weise zusammenwirkt, dass eine relative Bewegung des Masts in Bezug auf den radialen Positionierungsflansch (423) begrenzt wird.

2. Leitrad nach Anspruch 1, wobei der Eingriffsabschnitt (34) an einem stromabwärtigen Ende entlang der Mittelachse (X) des radial inneren Endes (32) des Masts (30) angeordnet ist.

3. Leitrad nach Anspruch 1 oder 2, wobei der Eingriffsabschnitt (34) eine Schulter umfasst, die in er Dicke des Masts (30) verwirklicht ist.

4. Leitrad nach einem der Ansprüche 1 bis 3, wobei ein innerer Durchgang (35) des rohrförmigen Masts (30) einer Öffnung (420) des radial inneren Mantels (42) zugewandt auf solche Weise mündet, dass die Ventilationsluft durch die Öffnung (420) bis zu einem Hohlraum unter dem Leitrad (P) geleitet wird, der radial innerhalb des radial inneren Mantels (42) angeordnet ist.

5. Leitrad nach Anspruch 4, das ein Dichtungsgehäuse (70) umfasst, das radial zwischen einer radial inneren Plattform (52) der Schaufel (50) und dem radial inneren Mantel (42) angeordnet ist, wobei das Dichtungsgehäuse (70) eine innere Umhüllung (I) aufweist, die der Öffnung (420) des radial inneren Mantels (42) zugewandt mündet, wobei das radial innere Ende (32) des Masts zumindest zum Teil in dem Dichtungsgehäuse (70) auf solche Weise angeordnet ist, dass die Ventilationsluft, die den Mast (30) durchquert, in das Dichtungsgehäuses (70) ausgestoßen wird.

6. Leitrad nach Anspruch 5, wobei die radial innere Plattform (52) der Schaufel (50) mit dem Dichtungsgehäuse (70) mittels Dichtungslaschen (72) verbunden ist, welche eine relative radiale Verschiebung des Dichtungsgehäuses (70) in Bezug auf die Schaufel (50) ermöglichen.

7. Leitrad nach Anspruch 5 oder 6, wobei der radial innere Mantel (42) einen stromaufwärtigen radialen Flansch (421) und einen stromabwärtigen radialen Flansch (422) umfasst, die dazu ausgestaltet sind, das Dichtungsgehäuse (70) axial zu umschließen, wobei der radiale Positionierungsflansch (423) axial zwischen dem stromaufwärtigen radialen Flansch (421) und dem stromabwärtigen radialen Flansch (422) angeordnet ist.

8. Leitrad nach einem der Ansprüche 5 bis 7, umfassend zumindest ein ringförmiges Verbindungsglied (90), das ein radial äußeres Verbindungsende (93), das mit dem Dichtungsgehäuse (70) verbunden ist, und ein radial inneres Verbindungsende (92) umfasst, das mit der Öffnung des radial inneren Mantels (42) auf solche Weise verbunden ist, um die Ventilationsluft, die den Mast (30) und das Dichtungsgehäuse (70) durchquert, zu dem Hohlraum unter dem Leitrad (P) zu leiten.

9. Leitrad nach Anspruch 8, wobei die radial inneren und äußeren Verbindungsenden (92, 93) des Verbindungsglieds (90) eine gewölbte Form aufweisen.

10. Turbine für eine Turbomaschine, umfassend zumindest einen Leitrad nach einem der vorhergehenden Ansprüche.

11. Turbomaschine, umfassend zumindest eine Turbine nach Anspruch 10.

## Claims

1. A turbomachine turbine nozzle extending around a central axis (X), comprising at least one radially outer shroud (43), at least one radially inner shroud (42), and at least one blade (50) made of ceramic matrix composite material, distinct from the radially inner shroud (42) and from the radially outer shroud (43), and extending radially between said radially inner shroud (42) and said radially outer shroud (43), the blade (50) being hollow and comprising a cavity opening at a radially inner end and at a radially outer end of the blade (50), the nozzle comprising at least one tubular mast (30) arranged in the cavity of the blade and allowing routing the ventilation air passing through said cavity of the blade (50), the mast (30) comprising a radially outer end (33) attached to the radially outer shroud (43), and **characterized in that** the mast (30) further comprises a radially inner end (32) cooperating with a radial flange (423) for positioning the radially inner shroud (42), the radially inner end (32) of the mast (30) comprising an engagement portion (34) which cooperates by interlocking with a notch (424) of said radial positioning flange (423) so as to limit relative movement of the mast with respect to the radial positioning flange (423).

2. The nozzle according to claim 1, wherein the engagement portion (34) is arranged at a downstream end, along the central axis (X), of the radially inner end (32) of the mast (30).

3. The nozzle according to claim 1 or 2, wherein the engagement portion (34) comprises a shoulder provided in the thickness of the mast (30).

4. The nozzle according to any one of claims 1 to 3, wherein an internal passage (35) of the tubular mast (30) opens facing an opening (420) of said radially inner shroud (42), so as to route the ventilation air through the opening (420) to a sub-nozzle cavity (P) arranged radially inside the radially inner shroud (42).

5. The nozzle according to claim 4, comprising a sealing box (70) arranged radially between a radially inner platform (52) of the blade (50) and the radially inner shroud (42), the sealing box (70) comprising an internal housing (I) opening facing the orifice (420) of the radially inner shroud (42), the radially inner end (32) of the mast being arranged at least partly in the sealing box (70) so as to eject the ventilation air passing through the mast (30) into said sealing box (70).

6. The nozzle according to claim 5, wherein the radially inner platform (52) of the blade (50) is connected to the sealing box (70) by means of sealing tabs (72) allowing radial relative translation of the sealing box (70) with respect to the blade (50).

7. The nozzle according to claim 5 or 6, wherein the radially inner shroud (42) comprises an upstream radial flange (421) and a downstream radial flange (422) configured to axially surround the sealing box (70), the radial positioning flange (423) being arranged axially between the upstream radial flange (421) and the downstream radial flange (422).

8. The nozzle according to any one of claims 5 to 7, comprising at least one annular connecting member (90) comprising a radially outer connecting end (93) connected to the sealing box (70), and a radially inner connecting end (92) connected to the opening of the radially inner shroud (42), so as to be able to route toward the sub-nozzle cavity (P) the ventilation air passing through the mast (30) and the sealing box (70).

9. The nozzle according to claim 8, wherein the radially inner and outer connecting ends (92, 93) of the connecting member (90) have a domed shape.

10. A turbomachine turbine comprising at least one nozzle according to any one of the preceding claims.

11. A turbomachine comprising at least one turbine according to claim 10.
